(19) Europäisches Patentamt
European Patent Office
Office européen des brevets

(11) **EP 4 549 791 A1**

(12) **EUROPEAN PATENT APPLICATION**
published in accordance with Art. 153(4) EPC

(43) Date of publication:
07.05.2025 Bulletin 2025/19

(21) Application number: 23830329.1

(22) Date of filing: 28.06.2023

(51) International Patent Classification (IPC):
*F16K 27/06* (2006.01)     *F16K 11/22* (2006.01)
*F16K 31/04* (2006.01)     *F04B 53/22* (2006.01)

(52) Cooperative Patent Classification (CPC):
F04B 53/22; F16K 11/22; F16K 27/06; F16K 31/04

(86) International application number:
PCT/CN2023/103155

(87) International publication number:
WO 2024/002156 (04.01.2024 Gazette 2024/01)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 29.06.2022 CN 202210756044

(71) Applicant: **ZHEJIANG SANHUA AUTOMOTIVE COMPONENTS CO., LTD.**
**Hangzhou, Zhejiang 310018 (CN)**

(72) Inventors:
• BAO, Junfeng
  Hangzhou, Zhejiang 310018 (CN)
• ZHANG, Jun
  Hangzhou, Zhejiang 310018 (CN)
• HU, Jundi
  Hangzhou, Zhejiang 310018 (CN)
• WANG, Lixin
  Hangzhou, Zhejiang 310018 (CN)
• WANG, Zhengwei
  Hangzhou, Zhejiang 310018 (CN)

(74) Representative: **Lavoix**
**Bayerstraße 83**
**80335 München (DE)**

(54) **FLUID CONTROL DEVICE AND MANUFACTURING METHOD THEREFOR, AND FLUID CONTROL SYSTEM**

(57)     Disclosed are a fluid control device and a manufacturing method therefor, and a fluid control system. The fluid control device (1000) comprises at least two fluid assemblies (LK), and at least two driving assemblies (100) arranged spaced apart from each other, wherein each driving assembly comprises a stator assembly (10), each fluid assembly comprises an action member (LK1), and the stator assembly can make the action member act. The fluid control device further comprises a connection assembly (20) and a connection terminal (200), wherein the connection assembly comprises a connection housing (21) and a connection lead (22); at least part of the connection housing is connected between the at least two driving assemblies; the connection lead is located in the connection housing; and the connection terminal is electrically connected to the stator assemblies of some of the driving assemblies, and is electrically connected to the stator assemblies of the other driving assemblies by means of the connection lead. The fluid control device is beneficial for simplifying the wiring structure of a fluid control system, and is thus also beneficial for simplifying the fluid control system.

FIG. 6

heightwise direction

## Description

The present application claims the priority of the Chinese Patent Application No. 202210756044.1, titled "FLUID CONTROL DEVICE AND MANUFACTURING METHOD THEREFOR, AND FLUID CONTROL SYSTEM", filed on June 29, 2022 with the China National Intellectual Property Administration, which is incorporated herein by reference in its entirety.

## FIELD

The present application relates to the technical field of fluid control, and in particular to a fluid control device and a manufacturing method therefor, and a fluid control system.

## BACKGROUND

A fluid control system generally includes at least two fluid elements, and each of the fluid elements needs to be provided with a corresponding driving assembly to actuate the fluid element. There are many driving assemblies, resulting in complicated wiring structure, and difficulty in simplifying the fluid control system.

## SUMMARY

An object of the present application is to provide a fluid control device and a manufacturing method therefor, and a fluid control system, which facilitates simplifying wiring structure of the fluid control system, and thus simplifying the fluid control system.

In an aspect, a fluid control device is provided according to an embodiment of the present application, which includes at least two fluid assemblies and at least two driving assemblies. Each driving assembly includes a stator assembly, and each fluid assembly includes a movable unit. The stator assembly enables the movable unit to act. The fluid control device further includes a connection assembly and a connection terminal. The connection assembly includes a connection lead. The connection terminal is electrically connected to the stator assembly of one or more of the driving assemblies, and is electrically connected to the stator assembly of one or more of the other driving assemblies through the connection lead.

In another aspect, a method for manufacturing a fluid control device is further provided according to an embodiment of the present application, which includes the following steps:

providing at least part of the at least two driving assemblies, each of which includes a stator assembly;

assembling the driving assembly with the corresponding fluid assembly so that the stator assembly enables the movable unit of the fluid assembly to act;

arranging at least part of the connection assembly between at least two of the driving assemblies, wherein the connection assembly includes a connection lead; and

electrically connecting the stator assembly of one or more of the driving assemblies with a connection terminal through the connection lead.

In yet another aspect, a fluid control system is provided according to an embodiment of the present application, which includes the above-mentioned fluid control device, a control system and K wire harness structures. The fluid control device includes M connection terminals which are electrically connected to the stator assemblies. The control system is electrically connected to the wire harness structures, and the wire harness structures are electrically connected to the connection terminals. The number of the driving assemblies is N. $K=M\geq1$ and $M<N$, where K, M and N are all positive integers.

The fluid control device provided by the embodiment of the present application includes at least two fluid assemblies, and at least two driving assemblies spaced apart from each other. The stator assembly in the driving assembly can actuate the movable unit of the fluid assembly. Since the stator assemblies in the at least two driving assemblies all need power supply, the fluid control device of the embodiment of the present application is provided with a connection assembly, and the connection terminal is electrically connected to the stator assembly in a part of the driving assemblies, and is electrically connected to the stator assembly in part of the other driving assemblies through the connection lead, thereby simplifying the wiring structure of the fluid control system and thus simplifying the fluid control system, compared with the solution in which a separate wire harness structure is electrically connected to each driving assembly.

In the method for manufacturing the fluid control device provided by the embodiment of the present application, at least part of the connection assembly is arranged between at least two driving assemblies, and the connection terminal is electrically connected to the stator assembly in part of the driving assemblies, and is electrically connected to the stator assembly in part of the other driving assemblies through the connection lead, so that the wiring structure of the fluid control system can be reduced and simplified.

In the fluid control system of the embodiment of the present application, at least part of the connection assembly is connected to at least two driving assemblies, and the connection terminal is electrically connected to the stator assembly in part of the driving assemblies, and is electrically connected to the stator assembly in part of the other driving assemblies through the connection lead, so that the number of the connection terminals is less than that of the driving assemblies, thereby simplifying the wiring structure of the fluid control system.

## BRIEF DESCRIPTION OF THE DRAWINGS

FIG. 1 is a schematic exploded structural view of a fluid control device provided according to an embodiment of the present application;

FIG 2 is a schematic perspective structural view of the fluid control device shown in FIG. 1;

FIG. 3 is a schematic perspective structural view of an assembly of a driving assembly and a connection assembly provided according to an embodiment of the present application;

FIG. 4 is a schematic partial sectional structural view of the assembly shown in FIG. 3;

FIG. 5 is a schematic partial sectional structural view of the fluid control device shown in FIG. 2 at a first position;

FIG 6 is a schematic partial sectional structural view of the fluid control device shown in FIG. 2 at a second position;

FIG. 7 is a schematic exploded structural view of a second driving assembly provided according to an embodiment of the present application;

FIG. 8 is a schematic perspective structural view of a first driving assembly provided according to an embodiment of the present application;

FIG. 9 is a schematic sectional structural view of the first driving assembly shown in FIG. 8;

FIG. 10 is a schematic sectional structural view of a fluid control device provided according to another embodiment of the present application;

FIG. 11 is a schematic perspective structural view of an execution assembly provided according to an embodiment of the present application;

FIG. 12 is a schematic sectional structural view of the execution assembly shown in FIG. 11 at a first position;

FIG. 13 is a schematic sectional structural view of the execution assembly shown in FIG. 11 at a second position;

FIG. 14 is a schematic sectional structural view of the execution assembly shown in FIG. 11 at a third position; and

FIG. 15 is a schematic flow chart of a method for manufacturing a fluid control device provided according to an embodiment of the present application.

## DETAILED DESCRIPTION OF THE EMBODIMENTS

The features and exemplary embodiments of various aspects of the present application are described in detail below. To make the objects, solutions and advantages of the present application more clear and apparent, the present application is described in detail in conjunction with the drawings and the specific embodiments. Herein, relational terms such as "first" and "second" and the like are only used to distinguish one element from another having the same name and do not necessarily require or imply any such actual existence of relationship or order between those elements.

The fluid control device provided according to an embodiment of the present application can be applied to a fluid control system, for example, a fluid control system in a vehicle, and can easily realize circulation of the fluid in the fluid control system by using the fluid control assembly to control the fluid.

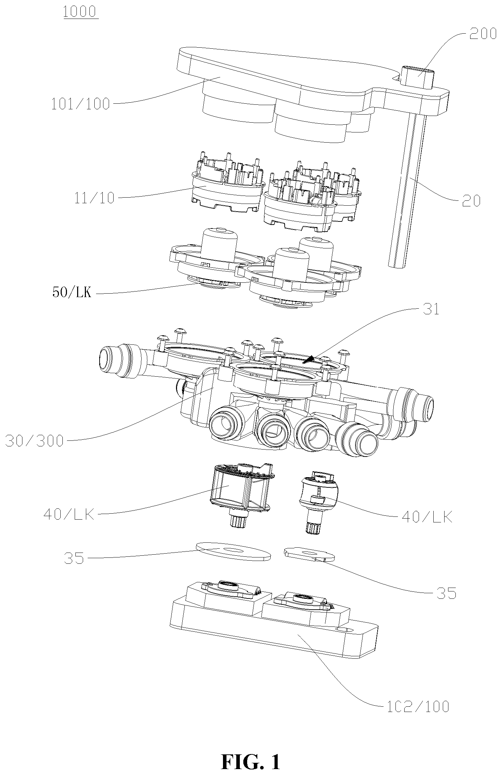

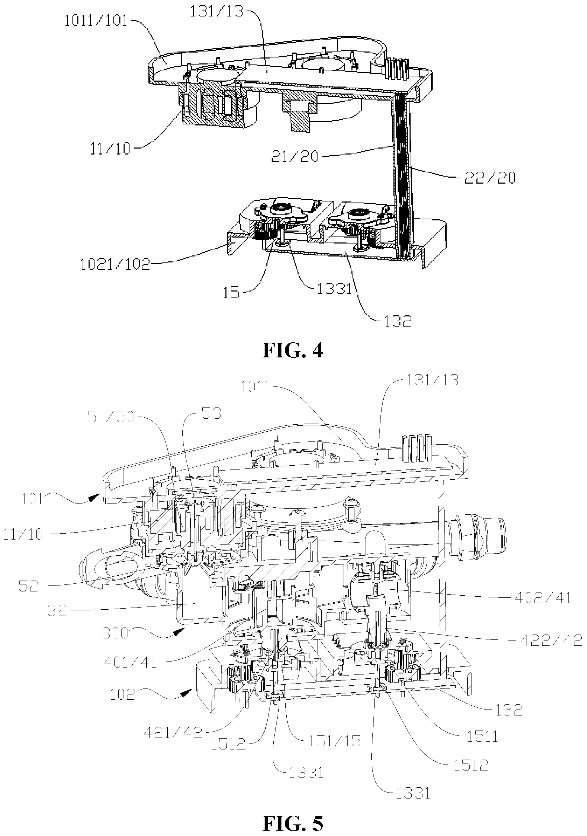

As shown in FIGS. 1 to 6, a fluid control device 1000 is provided according to an embodiment of the present application. The fluid control device 1000 includes an execution assembly 300 and at least two driving assemblies 100 spaced apart from each other. The driving assemblies 100 and the execution assembly 300 are hermetically connected. The execution assembly 300 includes at least two fluid assemblies LK, and each driving assembly 100 includes a stator assembly 10. The stator assembly 10 may be a part of a motor, or the stator assembly 10 generates a magnetic field when it is energized, enabling the rotor assembly in the pump assembly to rotate. Each fluid assembly LK includes a movable unit LK1, and the stator assembly 10 may actuate the movable unit LK1, so as to realize the fluid control function of the fluid control device 1000. In this embodiment, the number of the driving assemblies 100 is two, one of which has a stator assembly 10 capable of driving the rotor assembly in the pump assembly to rotate, and the other of which has a stator assembly 10 forms a part of the motor 12. The fluid assembly LK may include a control valve assembly 40 and a pump assembly 50. The motor 12 can actuate the movable unit LK1 in the control valve assembly 40, and the magnetic field generated by the stator assembly 11 after being energized can actuate the movable unit in the pump assembly 50.

Further, the fluid control device 1000 further includes a connection terminal 200, which may be connected to one of the driving assemblies 100. The connection terminal 200 is electrically connected to the stator assembly 10 in the driving assembly 100, and is exposed outside the fluid control device 1000. When the fluid control device 1000 is applied to the fluid control system, in order to operate the fluid control device 1000, a wire harness structure may be electrically connected to the connection terminal 200 to supply power to the stator assembly 10 in the driving assembly 100. If there are many driving assemblies 100, each of which is connected to a separate wire harness structure, the wiring structure of the fluid control system is complicated and the cost is high.

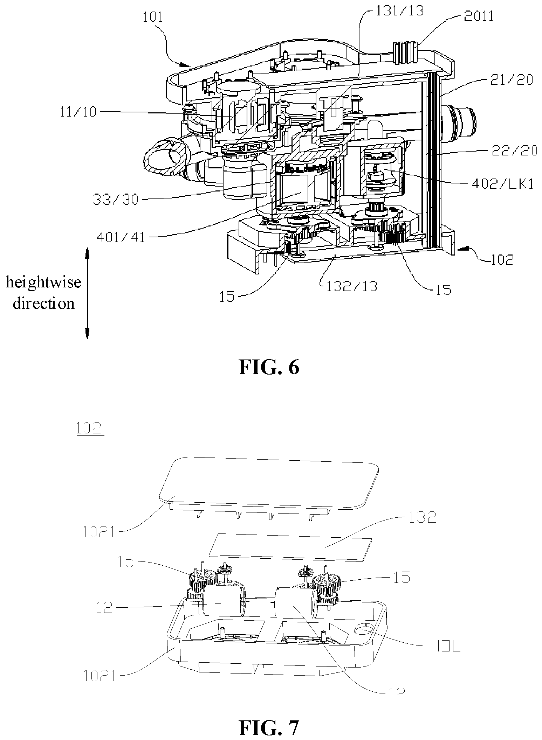

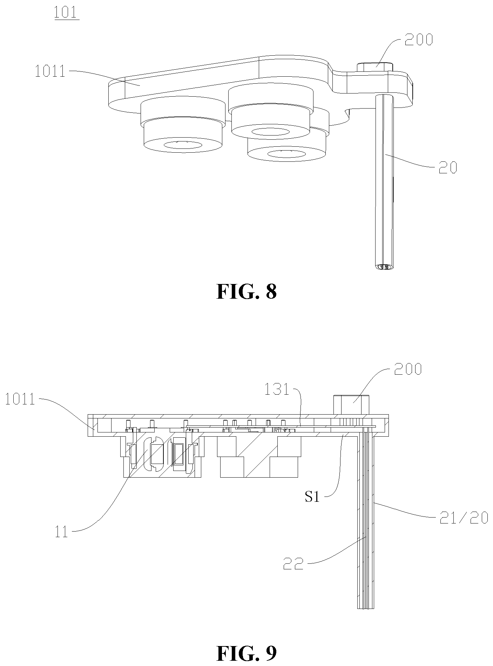

In order to solve the above problem, reference is further made to FIGS. 1 to 9. The fluid control device 1000 provided by the embodiment of the present application further includes a connection assembly 20, which includes a connection housing 21 and a connection lead 22. At least part of the connection housing 21 is connected between the at least two driving assemblies 100, and the connection lead 22 is located in the connection housing 21. The connection terminal 200 is electrically connected to the stator assemblies 10 of some of the driving assemblies 100, and is electrically connected to the stator assemblies 10 of the other driving assemblies 100 by means of the connection lead 22. In this way, compared with the solution in which a separate wire harness structure is connected to each of the driving assemblies, the fluid control device 1000 of the embodiment of the present application is provided with the connection assembly 20, which facilitates the simplification of the wiring structure of the fluid control system and further facilitates the simplification of the fluid control system. At least part of the connection lead 22 may extend along an arrangement direction of the driving assembly 100. For example, in FIG. 6, the driving assembly 100 includes a first driving assembly 101 and a second driving assembly 102, which are arranged in a height direction of the fluid control device, and at least part of the connection lead 22 may be arranged along the height direction of the fluid control device. Herein, the electrical connection between two components means that electrical signals can be transmitted between the two components, and the two components may be electrically connected by direct contact or via other components.

In order to facilitate the power supply to the stator assembly 10 in the driving assembly 100, in some embodiments, the connection terminal 200 is electrically connected with the wire harness structure (not shown). If the fluid control device 1000 includes M connection terminals 200 which are electrically connected to the stator assembly 10, and the number of the driving assemblies 100 is N, M≥1 and M<N, where M and N are positive integers. With the above arrangement, the number of the connection terminals 200 may be reduced, and when the fluid control device 1000 is applied to the fluid control system, the number of the wire harness structures can be reduced, thereby simplifying the fluid control system and reducing the cost. As shown in FIGS. 1 to 6, the fluid control device 1000 of the embodiment of the present application includes one connection terminal 200 and two driving assemblies 100. When the fluid control device 1000 is applied to the fluid control system, a single wire harness structure may be used to electrically connect the connection terminal 200, thereby supplying power to the stator assemblies 10 in the two driving assemblies 100.

As shown in FIGS. 6 and 7, in some embodiments, the driving assembly 100 includes a circuit board 13. For the same driving assembly 100, the stator assemblies 10 are electrically connected to the connection lead 22 via the circuit board 13. For example, in FIG. 6, each of the first driving assembly 101 and the second driving assembly 102 includes the circuit board 13. The stator assembly 10 in the second driving assembly 102 forms a part of the motor 12, and the stator assembly 10 in the motor 12 is electrically connected to the connection lead 22 at least via the circuit board 13. Alternatively, in some other embodiments, the driving assembly 100 may include an electric connection wire, and the stator assembly 10 is electrically connected to the connection lead 22 through the electric connection wire. In this case, the circuit board may be omitted from the corresponding driving assembly 100. The electric connection wire may be embedded in the housing of the driving assembly as an insert, or the electric connection wire may be a conductive wire attached to the housing of the driving assembly in a position-limiting manner. The electric connection wire may be welded or clamped to the connection lead 22 to realize the electric connection therebetween. Alternatively, if the stator assembly 10 in the driving assembly 100 is close to the connection lead 22, the electrical connection terminal of the stator assembly 10 may directly contact and be electrically connected with the connection lead 22, or the electrical connection terminal of the stator assembly 10 may be directly welded and fixed to the connection lead 22 to realize the electrical connection between them. With the above arrangement, the stator assembly 10 may be electrically connected to the connection lead 22.

With further reference to FIGS. 7 to 9, the connection assembly 20 may be fixed to some of the driving assemblies 100 by injection molding. In this embodiment, the connection assembly 20 and the first driving assembly 101 are fixed into an integral structure by injection molding. The first driving assembly 101 includes a first housing 1011. The connection housing 21 of the connection assembly 20, the housing of the connection terminal 200 and the first housing 1011 are fixed into an integral structure by injection molding. The first housing 1011 includes a first bottom wall portion S1, and the connection lead 22 is of a rigid pin structure. The connection lead 22 may be fixed as an insert to the first bottom wall portion S1 by injection molding. The connection housing 21 may be fixed to the first bottom wall portion S1 by injection molding, and include a chamber in which part of the connection lead 22 is located, so that the connection housing 21 may protect the connection lead 22.

With reference to FIGS. 6, 10 to 13, in some embodiments, the fluid control device 1000 further includes a housing assembly 30, which includes an accommodating cavity 31. At least part of the fluid assembly LK is located in the accommodating cavity 31. The driving assemblies 100 are located at both sides of the housing assembly 30 in the height direction. As shown in FIG. 6, the first driving assembly 101 and the second driving assembly 102 are located at both sides of the housing assembly 30 in the height direction, and the connection assembly 20 may be located outside the housing assembly 30. In this case, the connection assembly 20 and the housing assembly 30 are separately arranged. Alternatively, a part of the housing assembly 30 may further serve as at least a part of the connection assembly 20, that is, the part of the housing assembly 30 may be used as at least a part of the connection assembly 20 to mount the connection lead 22. In this case, a part of the connection lead 22 may be located in the housing assembly 30. For example, a part of the outer peripheral wall of the housing assembly 30 may be provided with a chamber, and the connection lead 22 may be located in the chamber of the housing assembly 30. In this embodiment, the connection assembly 20 is located outside the housing assembly 30, and the connection housing 21 and a first housing 1011 of the first driving assembly 101 are fixed into an integral structure by injection molding.

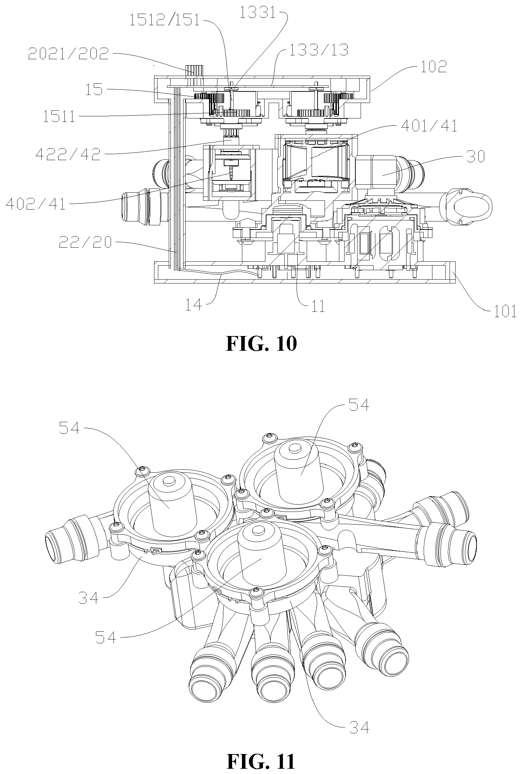

Further, as shown in FIGS. 10 to 13, in some embodiments, the driving assembly 100 includes a first driving assembly 101 and a second driving assembly 102. The first driving assembly 101 includes a first housing 1011 and a stator assembly 10. The stator assembly 10 includes a first stator assembly 11 and a second stator assembly. The stator assembly 10 of the first driving assembly 101 includes a first stator assembly 11. The first stator assembly 11 is connected to the first housing 1011 in a position-limiting way. For example, the first stator assembly 11 may be injection-molded into the first housing 1011 as an insert, or the stator assembly is assembled into the chamber of the first housing 1011. Optionally, the first driving assembly 101 includes three first stator assemblies 11, which may all be connected to the first housing 1011 in a position-limiting way. In the second driving assembly 102, the stator assembly 10 includes a second stator assembly which forms a part of the motor 12. Optionally, the second driving assembly 102 includes two motors 12.

It can be understood that the first driving assembly 101 may include the motor 12, or the second driving assembly 102 may include the first stator assembly 11, which is used to rotate the rotor assembly in the pump assembly. The fluid assembly LK includes a control valve assembly 40 and a pump assembly 50. The control valve assembly 40 includes a valve core 41 and a valve core shaft 42. The valve core 41 is in transmission connection with the motor 12 via the valve core shaft 42. The pump assembly 50 includes a rotor assembly 51, an impeller assembly 52, a pump shaft 53 and an isolation sleeve 54. The rotor assembly 51 may be located in a magnetic field range of the first stator assembly 11. The rotor assembly 51 is in transmission connection with the impeller assembly 52. The isolation sleeve 54 is located between the rotor assembly 51 and the first stator assembly 11. The rotor assembly 51 is arranged on an outer circumferential side of the pump shaft 53. The pump shaft 53 may be fixed to the isolation sleeve 54 by injection molding or assembled to the isolation sleeve 54 in a position-limiting way. The accommodating cavity 31 of the housing assembly 30 includes a valve cavity 311 and a pump cavity 312. At least part of the valve core 41 is located in the valve cavity 311, and at least part of the impeller assembly 52 is located in the pump cavity 312. The housing assembly 30 further includes a fluid channel 32 which communicates the pump cavity 312 with one of the valve cavities 311. With the above arrangement, the fluid may circulate between the pump assembly 50 and the control valve assembly 40, so that the fluid control device may integrate the pump assembly 50 and the control valve assembly 40, and the integration degree of the fluid control device is improved.

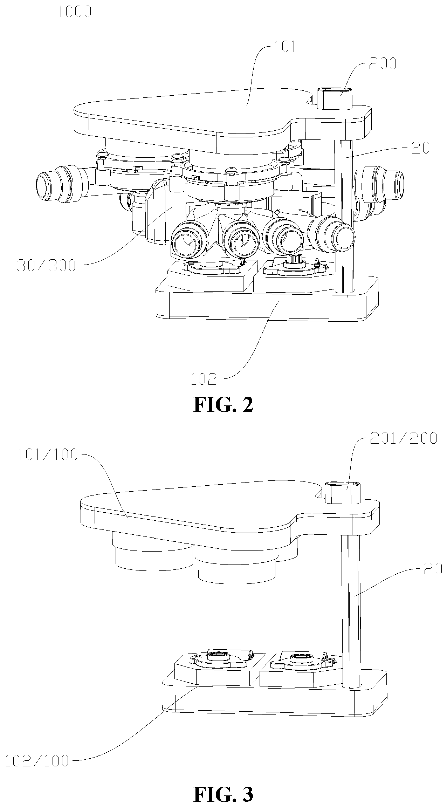

With reference to FIGS. 1 to 9, in some embodiments, each of the first driving assembly 101 and the second driving assembly 102 includes the circuit board 13. Specifically, the first driving assembly 101 includes a first control board 131 located in the chamber of the first driving assembly 101, and the second driving assembly 102 includes a second control board 132 located in the chamber of the second driving assembly 102 and electrically connected to the motor 12. The connection terminal 200 includes a first terminal 201, which is connected to the first driving assembly 101. As shown in FIG. 3, the housing of the first terminal 201 may be fixed to an upper cover of the first driving assembly 101 by injection molding or welding. The first terminal 201 includes a first pin portion 2011, which may be electrically connected with the first control board 131 by welding process, and electrically connected to the first stator assembly 11 via the first control board 131. Further, the first pin portion 2011 may be electrically connected to the motor 12 via the first control board 131, the connection lead 22 and the second control board 132. In practice, the first control board 131 may be a main circuit board and the second control board 132 may be an auxiliary circuit board. The first control board 131 is provided with control programs and control circuits for the first stator assembly 11 and the motor 12, and the second control board 132 is provided with a power supply circuit for the motor 12, etc. When the power supply module 100 is in operation, the first control board 131 may control the operating parameters of the first stator assembly 11 and the motor 12.

Alternatively, in some other embodiments, the first terminal 201 is connected to the second driving assembly 102, and the housing of the first terminal 201 is fixed to the housing of the second driving assembly 102 by injection molding. Correspondingly, the first pin portion 2011 is electrically connected to the motor 12 via the second control board 132, and the first pin portion 2011 is electrically connected to the first stator assembly 11 via the second control board 132, the connection lead 22 and the first control board 131. In this case, the second control board 132 may be the main circuit board, and the first control board 131 may be the auxiliary circuit board. The second control board 132 is provided with control programs and control circuits for the first stator assembly 11 and the motor 12. In practice, the position of the connection terminal 200 can be set based on needs of users.

Alternatively, in order to save costs, when the number of the driving assemblies 100 is at least two, the circuit board may be omitted from some of the driving assemblies 100. Based on this, as shown in FIG. 10, in some embodiments, the second driving assembly 102 includes a third control board 133, a gear assembly 15, and a potentiometer 1331. The gear assembly 15 includes an output gear 151, and the motor is in transmission connection with the valve core shaft 42 through the output gear 151. The potentiometer 1331 is located in and electrically connected with the third control board 133, and the output gear 151 includes a shaft portion 1512 and a toothed portion 1511. The shaft portion 1512 protrudes out of the toothed portion 1511, and at least part of the shaft portion 1512 is arranged in the potentiometer 1331. When the motor drives the output gear 151 to rotate, the potentiometer 1331 may detect the number of steps of the output gear 151, and then obtain the number of turns of the valve core 41. In this case, the connection terminal 200 includes a second terminal 202, which is connected to the second driving assembly 102. For example, the housing of the second terminal 202 and the housing of the second driving assembly 102 are fixed into an integral structure by injection molding. The second terminal 202 includes the second pin portion 2021, which may be electrically connected with the third control board 133 through a welding process. In this case, the second pin portion 2021 is electrically connected to the motor 12 via the third control board 133, and the second pin portion 2021 is electrically connected to the first stator assembly 11 via the third control board 133, the connection lead 22 and the electric connection wire 14 in the first driving assembly 101. In FIG. 10, only one electric connection wire 14 is schematically shown to electrically connect the first stator assembly 11 with the connection lead 22. In order to realize the rotation control of the first stator assembly 11, corresponding electric connection wires 14 may be provided to connect the first stator assembly 11 with the connection lead 22. In this case, the first driving assembly 101 may not be provided with a circuit board, that is, only the second driving assembly 102 may be provided with a circuit board which can control the first stator assembly 11 and the motor 12.

The structure of the execution assembly 300 provided by the embodiment of the present application will be further described with reference to FIGS. 1 to 13. In some embodiments, the control valve assembly 40 includes a first valve assembly, and the accommodating cavity 31 includes a first valve cavity 3111. The first valve assembly includes a first valve core 401. At least part of the first valve core 401 is located in the first valve cavity 3111, and the fluid channel 32 communicates the first valve cavity 3111 with the pump cavity 312. The housing assembly 30 includes a first side wall portion 33 and a pump cover portion 34. The first side wall portion 33 forms at least part of the wall portion of the first valve cavity 3111, and the pump cover portion 34 forms at least part of the wall portion of the first side wall portion 33. The first valve core 401 and the impeller assembly 52 are located at different heights in the height direction of the fluid control device 1000. An orthographic projection of the first side wall portion 33 in the height direction of the fluid control device 1000 at least partially overlaps with an orthographic projection of the pump cover portion 34 in the height direction of the fluid control device 1000. With the above arrangement, the fluid control device 1000 is more compact. Herein, the height direction of the fluid control device 1000 is parallel to or coincident with an axial direction of the first valve core 401.

In specific implementation, the fluid control assembly 1000 provided by the embodiment of the present application has three pump assemblies 50. The corresponding impeller assemblies 51 of the three pump assemblies 50 are located at different heights from the first valve core 401 in the height direction of the fluid control assembly, and the three impeller assemblies 51 may be located at the same height or at different heights, which is not limited in the present application.

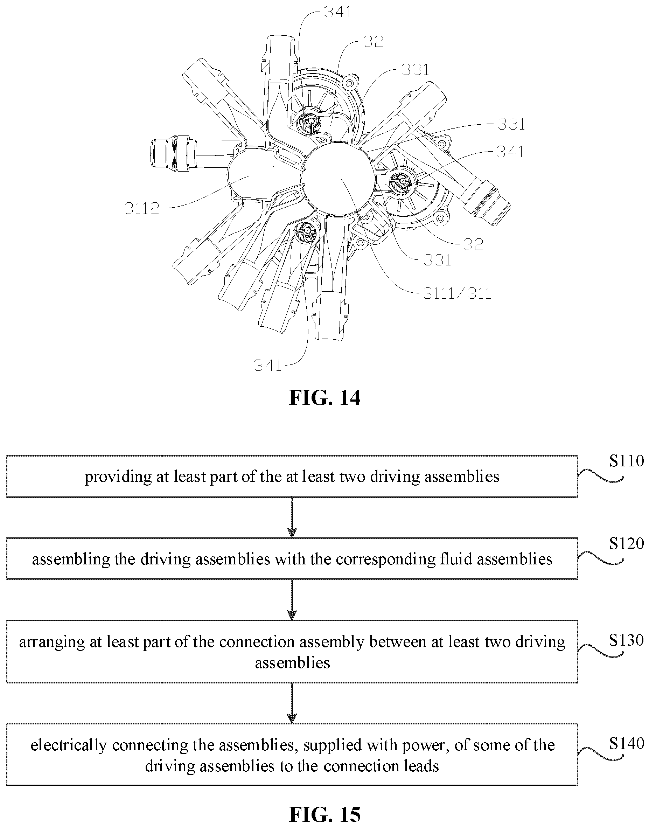

With reference to FIGS. 1 to 13, in order to realize the function of the pump assembly 50 driving the fluid, in some embodiments, the pump cover portion 34 further includes a first hole 341 and a second hole 342, both of which are communicated with the corresponding pump cavities 312. At least part of the first hole 341 is arranged to correspond to and be coaxial with the impeller assembly 51. In this case, the first hole 341 may be an inlet of the corresponding pump assembly 50, and an opening on one side of the second hole 342 is located at an outer peripheral edge of the impeller assembly 51. Thus, the second hole 342 may be an outlet of the corresponding pump assembly 50. By the rotation of the impeller assembly 51 located in the pump chamber 312, the fluid 31 circulates between the first hole 341 and the second hole 342. The first side wall portion 33 has a port 331 (shown in FIG. 14) which communicates with the first valve cavity 3111. One of the first hole 341 and the second hole 342 of the pump cover portion 34 communicates with the port 331 through the fluid channel 32. With the above arrangement, the fluid can be circulated between the pump assembly 50 and the first valve assembly 21.

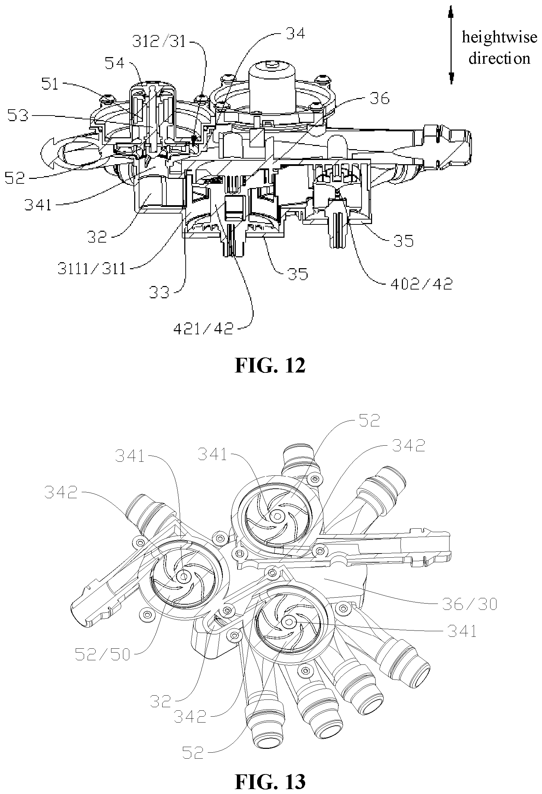

As shown in FIGS. 10 to 13, in some embodiments, the housing assembly 30 further includes a top wall portion 36 and a bottom wall portion 35. The top wall portion 36 is hermetically connected with the first side wall portion 33 and forms part of the wall portion of the first valve cavity 3111. In this embodiment, the top wall portion 36 and the first side wall portion 33 are fixed into an integrated structure by injection-molding, and the bottom wall portion 35 is hermetically connected with the first side wall portion 33, as shown in FIGS. 12 and 13. If the second hole 342 of the pump cover portion 34 communicates with the first valve cavity 3111 through the fluid channel 32, the opening at one side of the second hole 342 is located at the outer peripheral edge of the impeller assembly 51, and the opening at the other side of the second hole 342 is located at a side of the top wall portion 36 facing away from the first valve cavity 3111, and the top wall portion 36 forms a part of the wall portion of the fluid channel 32. With the above arrangement, the top wall portion 36 may be reasonably used to form a part of the wall portion of the fluid channel 32, so that the structure of the fluid control assembly is compact.

The number of the pump assemblies 50 herein is three. Among the pump cover portions 34 corresponding to the three pump assemblies 50, the second hole 342 of one pump cover portion 34 communicates with the first valve cavity 3111, and the first holes 341 of the other two pump cover portions 34 communicates with the first valve cavity 3111. The first valve core 401 has four communication channels, which can communicate every two of the eight ports 331 opened in the first side wall portion 33. The second valve core 402 may be a three-way valve core, and the proportional adjustment of the ports corresponding to the three-way valve core can be realized. In a specific implementation, the number of the pump assemblies 50 and the number of the control valve assemblies 40 can be set based on the needs of users. For example, the fluid control device may include two control valve assemblies 40 and two pump assemblies 50, which may be varied.

In summary, the fluid control device 1000 provided by the embodiment of the present application includes at least two fluid assemblies LK, and at least two driving assemblies 100 spaced apart from each other. The stator assembly 10 in the driving assembly 100 can actuate the movable unit LK1 of the fluid assembly LK. Since the stator assemblies 10 in the at least two driving assemblies 100 all need power supply, the fluid control device 1000 of the embodiment of the present application is provided with the connection assembly 20 at least partially connected between at least two driving assemblies 100, and the connection terminals 200 are electrically connected to the stator assemblies 10 of some of the driving assemblies 100, and are electrically connected to the stator assemblies 10 of other driving assemblies 100 through the connection leads 22. As a result, it is convenient to simplify the wiring structure of the fluid control system, and thus simplify the fluid control system, compared with the solution in which each driving assembly 100 is electrically connected to a separate wire harness structure.

In another aspect, a method for manufacturing a fluid control device is further provided according to an embodiment of the present application. As shown in FIGS. 1 to 14, the method for manufacturing the fluid control device includes following steps.

Step S110: providing at least part of the at least two driving assemblies 100, each of which includes a stator assembly 10.

In some embodiments, at least part of the two driving assemblies 100 may be provided, e.g., at least part of a first driving assembly 101 and at least part of a second driving assembly 102. The first driving assembly 101 includes a stator assembly 10, which may be a first stator assembly 11, and the second driving assembly 102 includes a stator assembly 10, which may be a motor 12.

Step S120: assembling the driving assembly 100 with the corresponding fluid assembly LK, so that the stator assembly 10 enables the movable unit LK1 of the fluid assembly LK to move.

Specifically, the fluid control device of the embodiment of the present application includes an execution assembly 300. The execution assembly 300 includes a fluid assembly LK and a housing assembly 30. The number of the fluid assemblies LK is at least two, and the housing assembly 30 has an accommodating cavity 31, in which at least part of the fluid assembly LK is located. The fluid assembly LK includes a control valve assembly 40 and a pump assembly 50. The movable unit LK1 of the control valve assembly 40 includes a valve core 41 and a valve core shaft 42. The movable unit of the pump assembly 50 includes a rotor assembly 51 and an impeller assembly 52. The pump assembly 50, the control valve assembly 40 and the housing assembly 30 may be assembled into an integral execution assembly 300, which in turn is assembled with the driving assembly 100.

Based on this, in step S120, assembling the driving assembly 100 with the corresponding fluid assembly LK includes assembling the driving assembly 100 with the execution assembly 300, such that the valve core 41 is in transmission connection with the motor 12, and such that the rotor assembly 51 is located in the magnetic field range of the first stator assembly 11 to allow the stator assembly 10 to actuate the movable unit LK1 of the fluid assembly LK.

Step S130: arranging at least part of the connection assembly 20 between at least two driving assemblies 100, wherein the connection assembly 20 includes the connection lead 22.

As shown in FIGS. 6 to 10, if the connection housing 21 of the connection assembly 20 and the first housing 1011 of the first driving assembly 101 are fixed into an integrated structure by injection molding, step S130 and step S120 may be performed simultaneously, that is, at least part of the connection assembly 20 may be arranged between at least two driving assemblies 100 as the driving assembly 100 is assembled with the corresponding fluid assembly LK. Alternatively, if the connection assembly 20 and the driving assembly 100 are separately arranged from each other, step S130 may be performed after step S120, and the connection housing 21 may be connected to the housing of the driving assembly 100.

Step S140: electrically connecting the stator assemblies 10 of some of the driving assemblies 100 to the connection leads 22, such that the connection terminals 200 are electrically connected to some of the stator assemblies 10 through the connection leads 22.

As shown in FIG. 6, when the second control board 132 is included in the second driving assembly 100, the second control board 132 is electrically connected to the motor 12. At this time, in step S140, the connection lead 22 may be electrically connected with the second control board 132 through welding process, so that the driving control signal of the motor 12 can be sent to the first control board 131 of the first driving assembly 101 through the connection assembly 20. Thus, it is convenient to realize the signal control of the two driving assemblies 100 by electrically connecting a single wire harness structure with a single connection terminal 200.

In order to facilitate the connection between the connection assembly 20 and at least two driving assemblies 100, in some embodiments, each driving assembly 100 includes the housing, and some of stator assemblies 10 are connected to the housing in a position-limiting way. Specifically, the first driving assembly 101 includes a first housing 1011, and the first stator assembly 11 is fixed to the first housing 1011 by injection-molding or is assembled with the first housing 1011. The second driving assembly 102 includes a second housing 1021, and the motor 12 and the second housing 1021 are arranged in a position-limiting way. The connection housing 21 is fixed to the housing of one of the driving assemblies 100 by injection molding, and at least one of the other driving assemblies 100 includes a limiting hole HOL. With reference to FIGS. 6 to 15, the connection housing 21 is fixed to the first housing 1011 by injection molding, and the second housing 1021 has a limiting hole HOL. In this case, step S120 of assembling the driving assembly 100 with the corresponding fluid assembly LK, includes:

> assembling the at least two driving assemblies 100 with the corresponding fluid assemblies LK; and

> inserting the connection assembly 20 into another driving assembly 100 through the limiting hole HOL.

Specifically, the first driving assembly 101 is assembled with the pump assembly 50 from one side of the execution assembly 300 in the height direction such that the rotor assembly 51 is located in the magnetic field range of the first stator assembly 11. The second driving assembly is in transmission connection with the valve core shaft 42 of the control valve assembly 40 from the other side of the execution assembly 300 in the height direction, and the connection assembly is inserted into the chamber of the second driving assembly 102 through the limiting hole HOL, and then the connection lead 22 is electrically connected to the stator assembly 10 in the second driving assembly 102.

In the method for manufacturing the fluid control device 1000 provided by the embodiment of the present application, at least part of the connection assembly 20 is arranged between at least two driving assemblies 100, and the connection terminal 200 is electrically connected to the stator assemblies 10 of some of the driving assemblies 100, and is electrically connected to the stator assemblies 10 of some other driving assemblies 100 through the connection lead 22, which is convenient to reduce and simplify the wiring structure of the fluid control system.

In yet another aspect, a fluid control system is further provided according to an embodiment of the present application, which includes a control system, a wire harness structure and the fluid control device 1000 in any of the above embodiments. The fluid control device 1000 includes M connection terminals 200, which are electrically connected to the stator assemblies 10. The control system is electrically connected to the wire harness structure, and the wire harness structure is electrically connected to the connection terminals 200. Provided that the number of the driving assemblies 100 is N, K=M≥1 and M<N, where K, M and N are positive integers. In this embodiment, K = 1, M = 1 and N = 2. In other embodiments, the number of K, M and N can be set based on the needs of the users. For example, K = 2, M = 1 and N = 3. With the above arrangement, it is convenient to make the number of connection terminals less than the number of driving assemblies, which is conducive to simplifying the wiring structure of the fluid control system.

It should be noted that the above embodiments are only used to illustrate the present application, and not to limit the technical solution described according to the present application, such as the definition of directionality such as "front", "rear", "left", "right", "up" and "down". In this specification, the present application has been described in detail with reference to the above embodiments, however, those skilled in the art should understand that they can still make modification, combination or equivalently replacement of the present application, and all technical solutions and improvements that do not depart from the spirit and scope of the present application shall fall within the scope claimed by the claims of the present application.

**Claims**

1. A fluid control device (1000), comprising at least two fluid assemblies (LK) and at least two driving assemblies (100), wherein each driving assembly (100) comprises a stator assembly (10), and each fluid assembly (LK) comprises a movable unit (LK1) actuated by the corresponding stator assembly (10); and
the fluid control device (1000) further comprises a connection assembly (20) and a connection terminal (200), wherein the connection assembly (20) comprises a connection lead (22), and the connection terminal (200) is electrically connected to the stator assembly (10) of one or more of the driving assemblies (100) and is electrically connected to the stator assembly (10) of one or more of the other driving assemblies (100) via the connection lead (22).

2. The fluid control device (1000) according to claim 1, wherein the driving assembly (100) comprises a circuit board (13) through which the stator assembly (10) in the same driving assembly (100) is electrically connected to the connection lead (22); or

   the driving assembly (100) comprises an electric connection wire (14) through which the stator assembly (10) is electrically connected to the connection lead (22); or
   the stator assembly (10) in the driving assembly (100) is arranged in contact with the connection lead (22) and electrically connected with the connection lead (22).

3. The fluid control device (1000) according to claim 1 or 2, comprising M connection terminals (200), and N driving assemblies (100), wherein

   M≥1 and M <N,
   where M and N are positive integers.

4. The fluid control device (1000) according to claim 3, further comprising a housing assembly (30), wherein the housing assembly (30) comprises an accommodating cavity (31), and at least part of the fluid assembly (LK) is located in the accommodating cavity (31);

   the driving assemblies (100) are respectively arranged at two sides of the housing assembly (30) in a height direction, and
   the connecting assembly (20) is located outside the housing assembly (30), or part of the housing assembly (30) is further used as at least part of the connecting assembly (20).

5. The fluid control device (1000) according to claim 4, wherein the driving assembly (100) comprises a first driving assembly (101) and a second driving assembly (102),

   the first driving assembly (101) comprises a first housing (1011), the stator assembly (10) of the first driving assembly (101) comprises a first stator assembly (11) connected to the first housing (1011) in a position-limiting way, and
   one or more stator assemblies (10) of the second driving assembly (102) form a part of a motor (12).

6. The fluid control device (1000) according to claim 5, wherein the fluid assembly (LK) comprises a control valve assembly (40) and a pump assembly (50), wherein

   the movable unit (LK1) of the control valve assembly (40) comprises a valve core (41) and a valve core shaft (42), and the valve core (41) is in transmission connection to the motor (12) via the valve core shaft (42), and
   the movable unit (LK1) of the pump assembly (50) comprises a rotor assembly (51) and an impeller assembly (52), wherein the rotor assembly (51) is located in a magnetic field range of the first stator assembly (11), and the rotor assembly (51) is in transmission connection with the impeller assembly (52).

7. The fluid control device (1000) according to claim 6, wherein the accommodating cavity (31) of the housing assembly (30) comprises a first valve cavity (311) and a pump cavity (312), wherein at least part of the valve core (41) is located in the first valve cavity (311), and at least part of the impeller assembly (52) is located in the pump cavity (312), and
   the housing assembly (30) further comprises a fluid channel (32), which communicates the pump cavity (312) and the first valve cavity (311).

8. The fluid control device (1000) according to claim 5, wherein the first driving assembly (101) comprises a first control board (131), which is located in a chamber of the first driving assembly (101), and the second driving assembly (102) comprises a second control board (132), which is located in a chamber of the second driving assembly (102), the connection terminal (200) comprises a first terminal (201), which comprises a first pin portion (2011);

   the first pin portion (2011) is electrically connected to the first stator assembly (11) via the first control board (131), and the first pin portion (2011) is electrically connected to the motor (12) via the first control board (131), the connection lead (22) and the second control board (132); or
   the first pin portion (2011) is electrically connected to the motor (12) via the second control board (132), and the first pin portion (2011) is electrically connected to the first stator assembly (11) via the second control board (132), the connection lead (22) and the first control board (131).

9. The fluid control device (1000) according to claim 5, wherein the second driving assembly (102) comprises a third control board (133), a gear assembly

(15) and a potentiometer (1331), wherein the gear assembly (15) comprises an output gear (151), the motor (12) is in transmission connection to the valve core shaft (42) of the control valve assembly (40) through the output gear (151), and

the potentiometer (1331) is located in and electrically connected with the third control board (133), and the output gear (151) comprises a shaft portion (1512) and a toothed portion (1511), wherein the shaft portion (1512) protrudes out of the toothed portion (1511), and at least part of the shaft portion (1512) is disposed in the potentiometer (1331).

10. The fluid control device (1000) according to claim 9, wherein the connection terminal (200) comprises a second terminal (202) connected to the second driving assembly (102) and comprising a second pin portion (2021), and

the second pin portion (2021) is electrically connected to the motor (12) via the third control board (133), and is electrically connected to the first stator assembly (11) via the third control board (133), the connection lead (22), and an electric connection wire (14) in the first driving assembly (101).

11. The fluid control device (1000) according to any one of claims 7 to 10, wherein the control valve assembly (40) comprises a first valve assembly, and the accommodating cavity (31) comprises a first valve cavity (311) and a pump cavity (312), wherein the first valve assembly comprises a first valve core (401), at least part of the first valve core (401) is located in the first valve cavity (311), and the fluid channel communicates the first valve cavity (311) and the pump cavity (312).

12. The fluid control device (1000) according to claim 11, wherein the fluid assembly (LK) comprises a pump assembly (50), the movable unit (LK1) of the pump assembly (50) comprises an impeller assembly (52), and the housing assembly (30) comprises a first side wall portion (33) and a pump cover portion (34), and the first side wall portion (33) forms at least part of the wall portion of the first valve cavity (311), the pump cover portion (34) forms at least part of the wall portion of the first side wall portion (33), the first valve core (401) and the impeller assembly (52) are respectively arranged at different heights in the height direction of the fluid control device (1000), and an orthographic projection of the first side wall portion (33) in the height direction of the fluid control device (1000) at least partially overlaps with an orthographic projection of the pump cover portion (34) in the height direction of the fluid control device (1000).

13. A method for manufacturing a fluid control device, comprising the steps of:

providing at least part of at least two driving assemblies (100), each of which comprises a stator assembly (10);

assembling the driving assemblies (100) with corresponding fluid assemblies (LK) such that the stator assemblies (10) enable movable units (LK1) of the fluid assemblies (LK) to move; arranging at least part of a connection assembly (20) between at least two of the driving assemblies (100), wherein the connection assembly (20) comprises a connection lead (22); and electrically connecting the stator assembly (10) of one or more of the driving assemblies (100) to the connection lead (22), such that a connection terminal (200) is electrically connected to one or more of the stator assemblies (10) through the connection lead (22).

14. The method for manufacturing the fluid control device according to claim 13, wherein the connection assembly further comprises a connection housing (21), at least part of the connection lead are located in the connection housing (21), each of the driving assemblies (100) comprises a housing, and the connection housing (21) is fixed to the housing of one of the driving assemblies (100) by injection molding, and at least one of the other driving assemblies (100) comprises a limiting hole (HOL), and

the step of assembling the driving assembly (100) with the corresponding fluid assembly (LK) comprises:

assembling at least two of the driving assemblies (100) with the corresponding fluid assemblies (LK); and inserting the connecting assembly (20) into another driving assembly (100) through the limiting hole (HOL).

15. A fluid control system, comprising the fluid control device (1000) according to any one of claims 1 to 12, a control system and K wire harness structures, wherein the fluid control device (1000) comprises M connection terminals (200) which are electrically connected to the stator assemblies (10), the control system is electrically connected to the wire harness structures, and the wire harness structures are electrically connected to the connection terminals (200), and the number of the driving assemblies (100) is N,

$$K = M \geq 1 \text{ and } M < N,$$

where K, M and N are positive integers.

1000

200

101/100

11/10

20

50/LK

31

30/300

40/LK

40/LK

35

35

102/100

**FIG. 1**

1000

**FIG. 2**

**FIG. 3**

**FIG. 4**

**FIG. 5**

101 131/13 2011

11/10 21/20

22/20

402/LK1

33/30

401/41 102

heightwise
direction

15 132/13 15

**FIG. 6**

102

1021 132

15 15

12

HOL

1021

12

**FIG. 7**

101

1011

200

20

**FIG. 8**

1011

131

200

11

S1

21/20

22

**FIG. 9**

FIG. 10

FIG. 11

heightwise
direction

**FIG. 12**

**FIG. 13**

**FIG. 14**

| | |
|---|---|
| providing at least part of the at least two driving assemblies | S110 |
| ↓ | |
| assembling the driving assemblies with the corresponding fluid assemblies | S120 |
| ↓ | |
| arranging at least part of the connection assembly between at least two driving assemblies | S130 |
| ↓ | |
| electrically connecting the assemblies, supplied with power, of some of the driving assemblies to the connection leads | S140 |

**FIG. 15**

<div align="center">

**INTERNATIONAL SEARCH REPORT**

</div>

| International application No. |
|---|
| **PCT/CN2023/103155** |

**A. CLASSIFICATION OF SUBJECT MATTER**

F16K 27/06(2006.01)i; F16K 11/22(2006.01)i; F16K 31/04(2006.01)i; F04B 53/22(2006.01)i

According to International Patent Classification (IPC) or to both national classification and IPC

**B. FIELDS SEARCHED**

Minimum documentation searched (classification system followed by classification symbols)

IPC:F16K,F04D,F04B,F01P,B60H

Documentation searched other than minimum documentation to the extent that such documents are included in the fields searched

Electronic data base consulted during the international search (name of data base and, where practicable, search terms used)

CNKI, CNABS, VEN: 阀, 泵, 叶轮, 多, 二, 两, 驱动, 电机, 线束, 接线, 布线, 引线, 供电, 电源, valve, pump, impeller, multi +, two, driv+, motor, wire w harness, wiring

**C. DOCUMENTS CONSIDERED TO BE RELEVANT**

| Category* | Citation of document, with indication, where appropriate, of the relevant passages | Relevant to claim No. |
|---|---|---|
| Y | CN 105386846 A (BORGWARNER INC.) 09 March 2016 (2016-03-09) description, specific embodiments, and figures 1-12 | 1-15 |
| Y | CN 109416959 A (YAZAKI CORPORATION) 01 March 2019 (2019-03-01) description, particular embodiments, and figures 1-6 | 1-15 |
| A | CN 113063002 A (ZHEJIANG SANHUA INTELLIGENT CONTROLS CO., LTD.) 02 July 2021 (2021-07-02) entire document | 1-15 |
| A | CN 110474126 A (ZHEJIANG SANHUA AUTOMOTIVE COMPONENTS CO., LTD.) 19 November 2019 (2019-11-19) entire document | 1-15 |
| A | CN 102345610 A (DENSO CORP.) 08 February 2012 (2012-02-08) entire document | 1-15 |
| A | US 2005265852 A1 (HITACHI, LTD.) 01 December 2005 (2005-12-01) entire document | 1-15 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **21 September 2023** | **05 October 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

<div align="center">

19

</div>

INTERNATIONAL SEARCH REPORT
Information on patent family members

International application No.

**PCT/CN2023/103155**

| Patent document cited in search report | | | Publication date (day/month/year) | Patent family member(s) | | | Publication date (day/month/year) |
|---|---|---|---|---|---|---|---|
| CN | 105386846 | A | 09 March 2016 | DE | 102015216141 | A1 | 03 March 2016 |
| | | | | US | 2016061092 | A1 | 03 March 2016 |
| | | | | IN | 201502638 | I1 | 10 June 2016 |
| CN | 109416959 | A | 01 March 2019 | US | 2019111866 | A1 | 18 April 2019 |
| | | | | US | 10569722 | B2 | 25 February 2020 |
| | | | | WO | 2018003401 | A1 | 04 January 2018 |
| | | | | JP | 2018001862 | A | 11 January 2018 |
| | | | | JP | 6448583 | B2 | 09 January 2019 |
| | | | | DE | 112017003271 | T5 | 14 March 2019 |
| CN | 113063002 | A | 02 July 2021 | None | | | |
| CN | 110474126 | A | 19 November 2019 | None | | | |
| CN | 102345610 | A | 08 February 2012 | DE | 102011080213 | A1 | 02 February 2012 |
| | | | | US | 2014099221 | A1 | 10 April 2014 |
| | | | | US | 9011112 | B2 | 21 April 2015 |
| | | | | US | 2012027629 | A1 | 02 February 2012 |
| | | | | US | 8734133 | B2 | 27 May 2014 |
| | | | | JP | 2012031808 | A | 16 February 2012 |
| US | 2005265852 | A1 | 01 December 2005 | EP | 1600346 | A1 | 30 November 2005 |
| | | | | EP | 1600346 | B1 | 15 July 2009 |
| | | | | DE | 602005015381 | D1 | 27 August 2009 |
| | | | | JP | 2006008107 | A | 12 January 2006 |

Form PCT/ISA/210 (patent family annex) (July 2022)

**EP 4 549 791 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210756044